# EUROPÄISCHE PATENTSCHRIFT

(11) **EP 2 456 387 B1**
(45) Veröffentlichungstag und Bekanntmachung des Hinweises auf die Patenterteilung: **12.02.2014**
(21) Anmeldenummer: 09775968.2
(22) Anmeldetag: 22.07.2009
(51) Int. Cl.: A61C 7/30

(54) **RINGMONTAGEPISTOLE**
RING INSTALLATION PISTOL
PISTOLET DE MONTAGE DE BAGUES

(43) Veröffentlichungstag der Anmeldung: 30.05.2012
(73) Patentinhaber: Stieven, Peter, 73614 Schorndorf (DE)
(72) Erfinder: Stieven, Peter, 73614 Schorndorf (DE)
(86) Internationale Anmeldenummer: PCT/DE2009/000983
(87) Internationale Veröffentlichungsnummer: WO 2011/009421

(56) Entgegenhaltungen:
- WO-A1-2006/117348
- US-A- 5 273 426
- US-A1- 2005 221 247

## Beschreibung

Die Ringmuntsgepistole(1) dient der automatischen Montage von Ringen aus elastischem Material, welche sich an einem Streifen(7) angegossen befinden.

Die elastischen Ringe dienen der Befestigung eines Drahtbogens in Metallschlössern (brackets), wie sie in der Kieferorthopädie (orthodontics), bei einer festsitzenden, auf die Zähne aufgeklebten Zahnspange (fixed appliance) gebräuchlich sind.

Eine aus dem Stand der Technik bekannte Ringmontagepistole ist beispielsweise in der US-A-2005/0221247 offenbart.

Durch Abdrücken des Abzughebels(2) der erfindungsgemäßen Ringmontagepistole, welcher in einem pistolenförmigen Gehäuse(3) montiert ist, wird der Arbeitskolben(4) nach vorne gedrückt.

Dort greifen die zusammengeführten Drahtgabelspitzen(5) in einen der angegossenen Ringe(6) und trennen diesen durch Zug von seinem Streifen(7) ab. Gleichzeitig fährt das Magazin(8) zur Seite. Der so vereinzelte Ring wird anschließend durch die Spreizung der Gabeln gedehnt und auf ein Metallschloss abgeschoben.

Dieser Spreizvorgang ist bereits Stand der Technik und gehört nicht zum beantragten Patent. Das beantragte Patent bezieht sich auf die automatisch ladende Montagepistole und die Ringmagazinstreifen aus elastischem Material. Beim Zurückführen des Abzughebels(2) wird über einen Transporthebel(9) ein Zahnrad(10) im Magazin(8) betätigt, welches über ein Transportrad(11) den Streifen(7) so verschiebt, so dass der nächste Ring am Streifen beim folgenden Arbeitsgang abgegriffen werden kann.

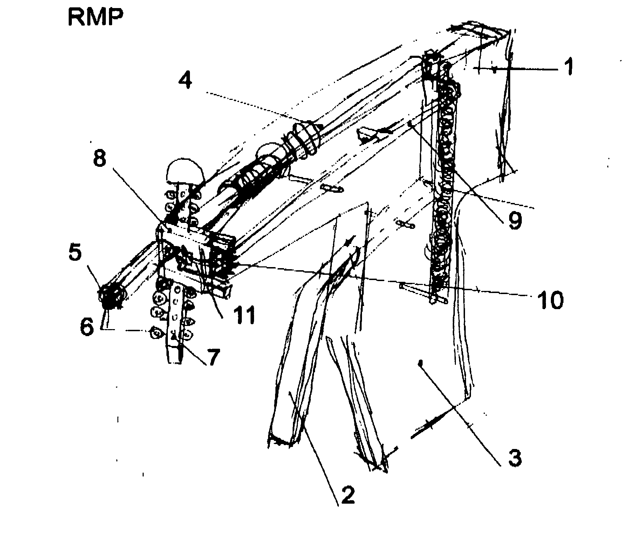

## Patentansprüche

1. Automatisch arbeitende Ringmontagepistole zur Zuführung von elastischen Ringen, welche sich an einem Streifen (7) angegossen befinden, umfassend ein Magazin (8) und einen Abzughebel (2), wobei die Zuführung der elastischen Ringe (6) automatisch durch das Magazin erfolgt, welches an die Betätigung durch den Abzughebel gekoppelt ist, wobei durch die automatische Zuführung der elastischen Ringe eine einhändige Betätigung der Ringmontagepistole (1) möglich ist, **dadurch gekennzeichnet, dass** beim Zurückführen des Abzughebels über einen Transporthebel (9) ein Zahnrad (10) im Magzin betätigt wird, welches über ein Transportrad (11) den Streifen so verschiebt, dass der nächste Ring am Streifen beim folgenden Arbeitsgang abgegriffen werden kann.

2. Streifen für eine Ringmontagepistole gemäß Anspruch 1, an welchem die zu verarbeitenden Ringe (6) befestigt sind wobei der Streifen (7) als Trägermaterial für die Ringe dient, **dadurch gekennzeichnet, dass** der Streifen Perforationen besitzt, durch welche der Transport von Ring zu Ring exakt definiert ist.

## Claims

1. Automatically operating ring mount gun for feeding elastic rings which are cast on a strip (7), comprising a magazine (8) and a trigger (2), where the supply of the elastic rings (6) is performed automatically by the magazine , which at the actuator is coupled with the trigger, a one-handed actuation of the ring mounting gun (1) is made possible by the automatic feed of the elastic rings , **characterized in, that** during the return of the trigger lever with a transport lever (9) a toothed wheel (10) is actuated in the magazine which the strip so shifts over by a transport wheel (11) that the next ring can be picked up at the following operation on the strip.

2. Strip for a ring installation pistol according to claim 1, in which the rings (6) to be processed are attached , wherein the strip (7) serves as a carrier material for the rings , **characterized in that** the strip has perforations through which the transport from ring to ring is well defined.

## Revendications

1. Anneau fonctionnant automatiquement pistolet de montage pour l'alimentation anneaux élastiques qui sont coulés sur une bande ( 7 ) , comprenant un magasin ( 8 ) et un déclencheur ( 2 ), où l'approvisionnement des anneaux élastiques ( 6 ) est effectuée automatiquement par le magazine , qui à l'actionneur est couplé à la détente , un actionnement d'une seule main de l'anneau de montage pistolet (1 ) est rendue possible par l'alimentation automatique des anneaux élastiques , **caractérisé en ce que** pendant le retour du levier de déclenchement avec un levier de transport (9), une roue dentée (10 ) est actionné dans la revue de la bande afin postes sur un transport (11 ) que l'anneau suivant peut être ramassé à l'opération suivante sur la bande.

2. Bande pour une arme de poing en anneau selon la revendication 1 , dans lequel les anneaux (6) à traiter est fixé , dans lequel la bande (7 ) sert de matériau support pour les bagues , **caractérisé en ce que** la bande a des perforations à travers lesquelles le transport d'anneau en anneau est bien défini.
